# EUROPEAN PATENT APPLICATION

(11) **EP 4 746 357 A1**
(43) Date of publication of application: **20.05.2026**
(21) Application number: 24943524.9
(22) Date of filing: 12.06.2024
(51) Int. Cl.: H04L 12/28

(54) **DEVICE AND METHOD FOR CONFIGURING GROUP IN HOME NETWORK SYSTEM**

(71) Applicant: LG Electronics Inc., Yeongdeungpo-gu Seoul 07336 (KR)
(72) Inventor: LEE, Dong Hun, Seoul 08592 (KR)
(74) Representative: Schott, Jakob Valentin
(86) International application number: PCT/KR2024/008047
(87) International publication number: WO 2025/258709

(57) **Abstract**

The present invention relates to a technology of an apparatus and method for setting a group in a home network system, and a method of setting a group in a home network system according to one embodiment of the present invention, which is an operating method of two or more home appliances and a user terminal constituting the home network system, includes setting, by the user terminal, a group for the two or more home appliances, transmitting a first message notifying a master device among the home appliances that it is a master device of the group, and transmitting a second message notifying a slave device among the home appliances that it is a slave device of the group, receiving, by the master device and the slave device, the first message and the second message, respectively, and transmitting and receiving a message of an Internet protocol (IP) layer to perform a discovery process, and transmitting and receiving, by the master device and the slave device, a message of an application layer to perform a grouping process after the discovery process.

## Description

### [Technical Field]

The present invention relates to a technology for an apparatus and method for setting a group in a home network system.

### [Description of the Related Art]

As communication functions are added to numerous home appliances, specific technologies for managing each individual home appliance are required. Each home appliance can be controlled in various ways when establishing a home network through the communication functions.

However, home appliances cannot provide the complex communication functions of a computer or a mobile phone, and a method of providing services can vary depending on functions of the home appliances.

Accordingly, in the present specification, a method of enabling efficient communication between home appliances will be described.

### [Disclosure]

### [Technical Problem]

The present specification is directed to enabling efficient communication between home appliances by grouping the home appliances.

In addition, the present specification is directed to using a Wi-Fi module embedded in a home appliance to enable group generation and group joining.

In addition, the present specification is directed to improving the convenience of grouping home appliances.

Objects of the present invention are not limited to the above-described object, and other objects and advantages of the present invention which are not mentioned can be understood by the following description and more clearly understood by embodiments of the present disclosure. In addition, it will be able to be easily seen that the objects and advantages of the present invention may be achieved by devices and combinations thereof that are described in the claims.

### [Technical Solution]

According to one embodiment of the present invention, there is provided a user terminal including a terminal communication unit configured to communicate with two or more home appliances, a terminal control unit configured to process group settings for the home appliances, and a terminal interface unit configured to display information related to the group settings for the home appliances or receive selection, wherein the terminal control unit generates a first message notifying a master device belonging to a group that it is a master device of the group and a second message notifying a slave device belonging to the group that it is a slave device of the group, and the terminal communication unit transmits the first message to the master device and the second message to the slave device.

According to one embodiment of the present invention, there is provided a master device including a device communication unit configured to communicate with a user terminal and a slave device, and a device control unit configured to generate a message to be transmitted to the user terminal and the slave device, wherein the device communication unit receives a message notifying that it is a master device of a group from the user terminal and transmits and receives a message of an Internet protocol (IP) layer to and from the slave device to perform a discovery process with the slave device, and the device control unit controls the device communication unit to transmit and receive a message of an application layer to and from the slave device to perform a grouping process for the slave device and the group.

According to one embodiment of the present invention, there is provided a slave device including a device communication unit configured to communicate with a user terminal and a master device, and a device control unit configured to generate a message to be transmitted to the user terminal and the master device, wherein the device communication unit receives a message notifying that it is a slave device of a group from the user terminal and transmits and receives a message of an Internet protocol (IP) layer to and from the master device to perform a discovery process with the master device, and the device control unit controls the device communication unit to transmit and receive a message of an application layer to and from the master device to perform a grouping process for the master device and the group.

According to one embodiment of the present invention, there is provided a method of setting a group in a home network system according to one embodiment of the present invention, which is an operating method of two or more home appliances and a user terminal constituting the home network system, includes setting, by the user terminal, a group for the two or more home appliances, transmitting a first message notifying a master device among the home appliances that it is a master device of the group, and transmitting a second message notifying a slave device among the home appliances that it is a slave device of the group, receiving, by the master device and the slave device, the first message and the second message, respectively, and transmitting and receiving a message of an Internet protocol (IP) layer to perform a discovery process, and transmitting and receiving, by the master device and the slave device, a message of an application layer to perform a grouping process after the discovery process.

### [Advantageous Effects]

According to the present invention, efficiency can be increased by grouping home appliances.

According to the present invention, the home appliance can perform group generation and group joining using the Wi-Fi module embedded in the home appliance.

According to the present invention, the convenience of grouping the home appliances can be improved.

Effects of the present invention are not limited to the above effects, and various effects of the present invention can be easily derived from the configuration of the present invention.

### [BRIEF DESCRIPTION OF THE DRAWINGS]

FIG. 1 is a view illustrating a configuration of a home network in which a user terminal and multiple home appliances are grouped according to one embodiment of the present invention.
FIG. 2 is a view illustrating an initialization and discovery process according to one embodiment of the present invention.
FIG. 3 is a view illustrating a grouping process according to one embodiment of the present invention.
FIG. 4 is a view illustrating a configuration of a router solicitation message usable in a configuration of IPv4 according to one embodiment of the present invention.
FIG. 5 is a view illustrating a configuration of a router advertisement message usable in the configuration of IPv4 according to one embodiment of the present invention.
FIG. 6 is a view illustrating the configuration of the router solicitation message usable in a configuration of IPv6 according to one embodiment of the present invention.
FIG. 7 is a view illustrating a configuration of a router advertisement message usable in the configuration of IPv6 according to one embodiment of the present invention.
FIG. 8 is a view illustrating a configuration of a master group solicitation message transmitted by a slave device to a master device according to one embodiment of the present invention.
FIG. 9 is a view illustrating a configuration of a master group information response message transmitted from the master device to the slave device according to one embodiment of the present invention.
FIG. 10 is a view illustrating a configuration of a group registration request message transmitted from the slave device to the master device according to one embodiment of the present invention.
FIG. 11 is a view illustrating a configuration of a group registration response message transmitted by the master device to the slave device according to one embodiment of the present invention.
FIG. 12 is a view illustrating a configuration of a group deregistration request message transmitted by the master device to the slave device according to one embodiment of the present invention.
FIG. 13 is a view illustrating a master group deregistration response message transmitted by the slave device to the master device according to one embodiment of the present invention.
FIG. 14 is a view illustrating a slave group deregistration request message transmitted by the slave device to the master device according to one embodiment of the present invention.
FIG. 15 is a view illustrating a slave group deregistration response message transmitted by the master device to the slave device according to one embodiment of the present invention.
FIG. 16 is a view illustrating components of a device according to one embodiment of the present invention.
FIG. 17 is a view illustrating the operations between the master device and slave devices constituting a group using a Wi-Fi protocol according to one embodiment of the present invention.
FIG. 18 is a view illustrating a process in which home appliances belonging to a group provide services for recommending today's menu or checking my recipes according to one embodiment of the present invention.
FIG. 19 is a view illustrating a configuration in which the slave device serves as a relay agent for other slave devices according to one embodiment of the present invention.
FIG. 20 is a view illustrating a configuration in which the master device serves as a relay agent for slave devices according to one embodiment of the present invention.
FIG. 21 is a view illustrating a configuration of a user terminal according to one embodiment of the present invention.

### [DETAILED DESCRIPTION OF THE INVENTION]

Hereinafter, embodiments of the present invention will be described in detail with reference to the accompanying drawings so that those skilled in the art to which the present invention pertains can easily carry out the present invention. The present invention may be implemented in various different forms and is not limited to the embodiments described herein.

To clearly describe the present invention, parts not related to the description have been omitted, and the same or similar components are denoted by the same reference numerals throughout the specification. Hereinafter, some embodiments of the present invention will be described in detail with reference to exemplary drawings. In adding reference numerals to components in each drawing, the same components may have the same reference numerals as much as possible even when they are shown in different drawings. In addition, in the description of the present disclosure, when it is determined that a detailed description of a related known configuration or function may obscure the gist of the present disclosure, detailed description thereof may be omitted.

In the description of the components of the present invention, terms such as "first," "second," "A," "B," "(a)," "(b)," and the like may be used. These terms are only for the purpose of distinguishing one component from another component, and the nature, sequence, order, or the like of the corresponding component is not limited by these terms. When a certain component is described as being "connected," "coupled," or "joined" to the other component, the component may be directly connected or joined to the other component, but it should be understood that another component may be "interposed" between the components, or the components may be "connected," "coupled," or "joined" through another component.

In addition, the components may be sub-divided for convenience of description in implementing the present invention, but these components may be implemented within a single device or module, or a single component may be implemented by being divided into multiple devices or modules.

In the present specification, home appliances may belong to one or more groups. In addition, home appliances belonging to the corresponding group may belong to any one of a master device and a slave device.

The master device may provide specific services to or control the slave devices. The slave devices may receive specific services from the master device.

A user terminal may set groups for multiple home appliances and set a master device and slave devices within the group. To this end, a specific application (e.g., a ThinQ App) may be installed on the user terminal.

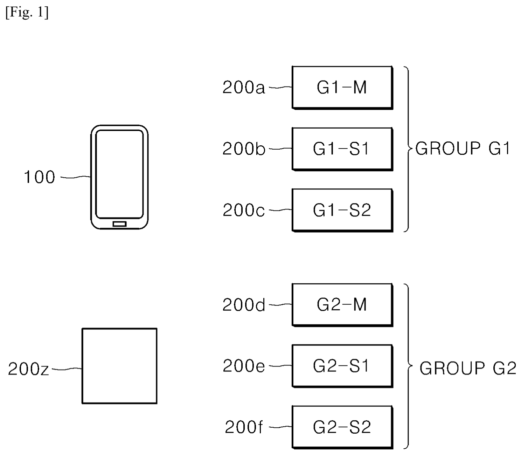

FIG. 1 is a view illustrating a configuration of a home network in which a user terminal and multiple home appliances are grouped according to one embodiment of the present invention. A user terminal 100 and home appliances may constitute a single home network system.

The user terminal 100 uses an installed application to set master and slave device settings for multiple home appliances (also referred to as "devices"). For convenience of description, a master device of Group 1 is denoted as G1-M, and slave devices of Group 1 are denoted as G1-S1, G1-S2, etc.

The user terminal 100 generates group G1 and sets a master device 200a and slave devices 200b and 200c. Likewise, the user terminal 100 generates group G2 and sets a master device 200d and slave devices 200e and 200f. 200z is a new device or a device that has withdrawn from an existing group, and the user terminal 100 may assign 200z a new group or the existing groups G1 and G2.

Each device may be included in multiple groups depending on the applications. For example, the G1-M device 200a is a master in group G1 but may participate as a slave device in another group.

In the configuration of FIG. 1, a home network in which each device is included in a specific group to provide user services may be established. As a first stage for establishing a home network, an automatic grouping process, which automatically groups home appliances, will be described. Accordingly, a home private network composed of home appliances may be established to allow a single home appliance to simultaneously control multiple home appliances or provide specific services within a single group network.

In addition, a single home appliance may simultaneously join multiple groups depending on the applications. In addition, through the home network, home appliances may provide various user services to users. For example, home appliances included in a cooking group may provide menu recommendations or recipe registration services. In addition, home appliances included in a specific group may provide a relay service to transmit data therebetween.

In the configuration of FIG. 1, a home network may be established through a process of notifying each device of whether it is a master or slave or of its group assignment. In the present specification, the process of establishing a home network using network technology between devices will be described. More specifically, an initialization process in which a user terminal generates groups and sets home appliances as master and slave devices.

Then, a discovery process, which identifies groups that constitute a home network and provides group information, is performed using Internet protocol (IP). In addition, the grouping process, such as joining or leaving a group that constitutes the home network, is performed at an application layer.

The user terminal 100 and the home appliances 200a to 200z of FIG. 1 may constitute a single home network system. The home network system may include one or more groups, the user terminal 100 may set group generation, and the process in which a master device and slave devices form groups within the group may be performed without the intervention of the user terminal 100.

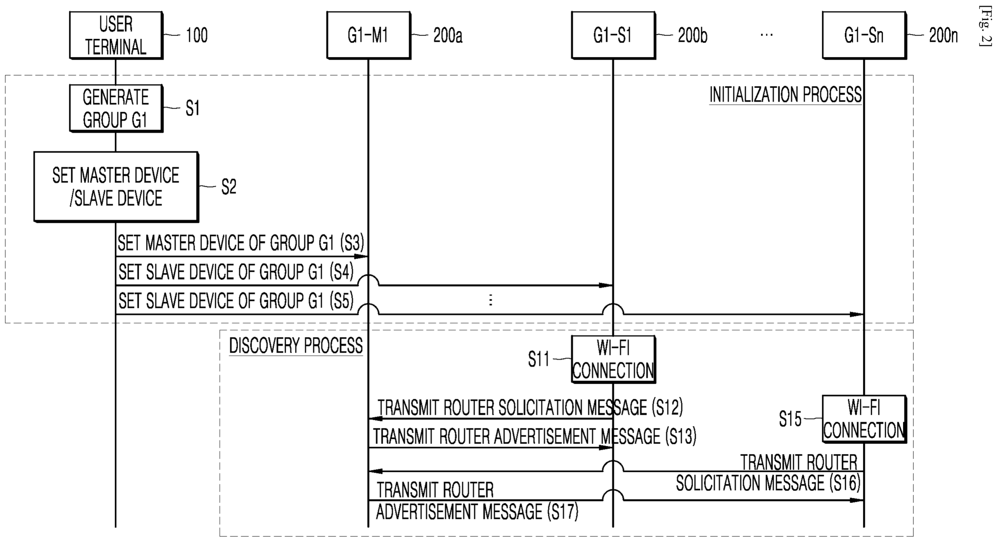

FIG. 2 is a view illustrating an initialization and discovery process according to one embodiment of the present invention. The user terminal 100 generates groups using an application (e.g., an LG ThinQ app) or the like. In FIG. 2, the user terminal 100 generates a group referred to as "G1" (S1). Group generation is intended to group home appliances for a specific purpose, and groups may be generated based on the types of functions provided by the home appliances. Alternatively, groups may be generated based on locations of the home appliances. To this end, when the user terminal 100 lists each home appliance and then two or more home appliances are selected, the user terminal 100 may output detailed information on groups based on the types or locations of the selected home appliances.

For example, when a refrigerator and an oven are selected on a touch screen of the user terminal 100, the user terminal 100 may display group information referred to as "cooking group." In another example, when an air conditioner and a TV are selected on the touch screen of the user terminal 100 and both home appliances are located in the living room, the user terminal 100 may display group information referred to as "living room group."

Then, the user terminal 100 sets a master device and slave devices to belong to the generated group G1 (S2). In addition, the user terminal 100 sets a first device G1-M1 200a as a master device of group G1 (S3). Likewise, the user terminal 100 sets a second device G1-S1 200b as a slave device of group G1 (S4) and an n^{th} device G1-Sn 200n as a slave device of group G1 (S5).

Operations S1 to S5 are initialization processes.

Then, after the second device G1-S1 200b and the n^{th} device G1-Sn 200n, which are set as slave devices, initiate Wi-Fi connection (S11, S15), the second device G1-S1 200b and the n^{th} device G1-Sn 200n transmit a router solicitation message requesting an IP address of the master device 200a (S12, S16). At this time, the slave devices 200b and 200n may operate as Wi-Fi stations, and the master device 200a may operate as a soft AP.

The master device 200a transmits a router advertisement message including an IP address of the master device 200a, which is the group master, to the slave devices 200b and 200n (S13, S17).

Operations S11 to S17 are discovery processes. Using an IP router discovery protocol, each of the slave devices 200b and 200n may obtain the IP address (e.g., an IPv4 address or an IPv6 address) of the master device. During the discovery process, the master device 200a and the slave devices transmit and receive a message of an IP layer.

In operations S12 and S16, an IPv4 or IPv6-based router solicitation message may be transmitted according to the specific type of IP protocol. For example, in an embodiment of IPv4, an IPv4-based router solicitation message may be transmitted, and in an embodiment of IPv6, an IPv6-based router solicitation message may be transmitted.

However, for the operations of the master and slave devices of the present invention, the slave devices 200b and 200n may set a code value within the message to a predetermined value.

In addition, in operations S13 and S17, an IPv4 or IPv6-based router advertisement message may be transmitted according to the specific type of IP protocol. For example, in an embodiment of IPv4, an IPv4-based router advertisement message may be transmitted, and in an embodiment of IPv6, an IPv6-based router advertisement message may be transmitted. The router advertisement message may include a group ID list and a master IP address list.

For the operations of the master and slave devices of the present invention, the master device 200a may set a code value within the message to a predetermined value and include additional information. In this case, according to the specific type of IP protocol, the router advertisement message may include a master IPv4 address list or a master IPv6 address list.

In an embodiment in which IPv4 is applied among the IP protocols, the master device 200a becomes an IPv4 host router, and the slave devices 200b and 200n become IPv4 hosts.

In an embodiment in which IPv6 is applied among the IP protocols, the master device 200a becomes an IPv6 host router, and the slave devices 200b and 200n become IPv6 hosts.

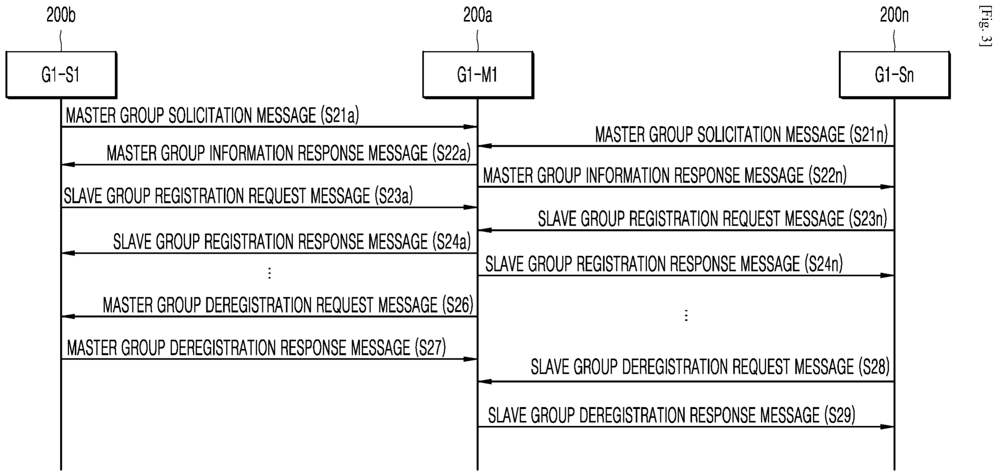

FIG. 3 is a view illustrating a grouping process according to one embodiment of the present invention. After performing the initialization and discovery processes of FIG. 2, each device may transmit a grouping message from the application layer. More specifically, each device may perform a Wi-Fi connection procedure and then perform the router discovery procedure, which is the discovery process of operations S12, S13, S16, and S17 of FIG. 2. That is, each slave device may perform the router discovery procedure with the master device.

The slave devices 200b and 200n receiving the router advertisement messages of operations S13 and S17 in FIG. 2 transmit a master group information request message (Master_Group_Info_Rquest Message) requesting group information on the groups managed by the master to the master device 200a (S21a, S21n).

The master device 200a receiving the request message transmits a master group information response message (Master_Group Info_Response Message) including information on the groups managed by the master device to the slave devices 200b and 200n (S22a, S22n).

Then, the slave devices 200b and 200n identifying the group information transmit a group registration request message (Slave_Group_Registration_Request Message) to join the groups managed by the master device 200a to the master device 200a (S23a, S23n).

The master device 200a receiving the request message registers the slave devices 200b and 200n as the group and transmits the corresponding results to the slave devices 200b and 200n (S24a, S24n). The transmitted message is the group registration response message (Slave Group_Registration_Response Message).

Then, the slave devices 200b and 200n included in the group may communicate with the master device 200a and perform a predetermined function. Meanwhile, the master device 200a may transmit a master group deregistration request message (Master De-registration Request Message) to the slave device 200b to deregister the slave device 200b, which is the first device, from the group (S26). The slave device 200b receiving the group deregistration request message transmit a master group deregistration response message (Master De-registration Response Message) including the corresponding results to the master device 200a (S27).

Conversely, the slave device 200n, which is the second device, may transmit the slave group deregistration request message (Slave De-registration Request Message) to the master device 200a to be withdrawn from the group (S28). The master device 200a receiving the slave group deregistration request message may transmit a slave group deregistration response message (Slave De-registration Response Message) including the corresponding results to the slave device 200n (S29).

A message flow of FIG. 3 is summarized as follows.

The slave device transmits the master group information request message (Master_Group Info_Rquest Message) to the master device (S21a, S21n). The master device transmits a master group information response message (Master_Group_Info_Response Message) to the slave device (S22a, S22n).

The slave device transmits the group registration request message (Slave_Group_Registration_Request Message) to the master device (S23a, S23n). The master device transmits the group registration response message (Slave_Group_Registration_Response Message) to the slave device (S24a, S24n).

The master device transmits the master group deregistration request message (Master De-registration Request Message) to the slave device (S26). The slave device transmits the master group deregistration response message (Master De-registration Response Message) to the master device (S27).

The slave device transmits the slave group deregistration request message (Slave De-registration Request Message) to the master device (S28). The master device transmits the slave group deregistration response message (Slave De-registration Response Message) to the slave device (S29).

Conditions in which a slave device withdraws from a group may be set during the initialization process. Conditions for withdrawal may include temporal conditions (such as leaving the group after a predetermined time has elapsed), communication conditions (such as leaving the group when the data transmission/reception volume is a predetermined amount or more or less), other conditions (such as leaving the group when the number of slave devices in the corresponding group is a predetermined reference value), etc.

Through the processes illustrated in FIGS. 2 and 3, home appliances may be grouped, and after service provision through the grouping is completed, slave devices may be withdrawn from the group. The withdrawal from the group may be classified into a case in which the master device 200a requests withdrawal (S26) and a case in which the slave device 200n requests withdrawal (S28).

The operation process of the home network system in the embodiments illustrated in FIGS. 1 to 3 is as follows. In two or more home appliances and a user terminal that constitute a home network system, the user terminal 100 sets a group for two or more home appliances and transmits a first message notifying the master device 200a among the home appliances that it is the master device of the group (see S3 in FIG. 2) and transmits a second message notifying the slave devices 200b and 200n among the home appliances that it is a slave device of the group (see S4 and S5 in FIG. 2).

In addition, after receiving the first and second messages, respectively, the master device 200a and the slave devices 200b and 200n transmit and receive the messages of the IP layer (Internet Protocol Layer) to perform the discovery process (see S11 to S17 in FIG. 2).

In addition, the master device 200a and the slave devices 200b and 200n transmit and receive the messages of the application layer to perform a grouping process after the discovery process (see FIG. 3).

A detailed structure of the messages transmitted by each device during the process of establishing a home network through the processes illustrated in FIGS. 2 and 3 will be described.

For example, each message structure is configured such that specific fields are divided based on an octet. The term "Reserved" refers to a reserved field. To distinguish each message type, the type, code, or type value of an option field may be set appropriately for the type of message.

The messages to be described below may use the conventional Wi-Fi technology embedded in each home appliance, and messages of a data transmission physical layer may be used between home appliances. Each device may be grouped using an IP router discovery protocol. In one embodiment, for IPv4, a message structure of RFC 1256 (ICMP router discovery messages) may be used with some modifications. In one embodiment, for IPv6, a message structure of RFC 4861 (neighbor discovery for IP version 6) may be used with some modifications.

In addition, various services may be provided using TCP/IP technology. In addition, each device may be grouped and may provide services by applying the new protocol of the present invention implemented at the application layer.

One embodiment of the present invention may use artificial intelligence (AI) technology embedded in home appliances (e.g., LG UP home appliances) to provide various services to users.

First, the messages transmitted and received during the discovery process will be described.

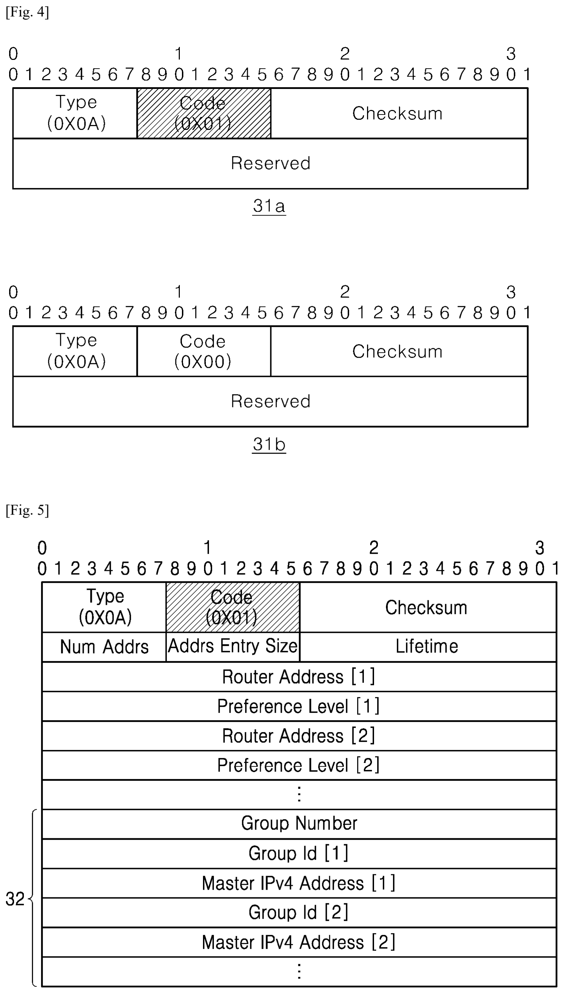

FIG. 4 is a view illustrating a configuration of a router solicitation message usable in a configuration of IPv4 according to one embodiment of the present invention. The type value is set to a value indicating the type of the corresponding message (e.g., 0x0A).

Meanwhile, a slave device according to one embodiment of the present invention sets a code value of the IPv4 router solicitation message to a predetermined value (e.g., 0x01 or the like), as illustrated in 31a. The slave device included in the embodiment of the present invention sets the code value to the predetermined value (e.g., 0x01) and transmits the router solicitation message.

On the other hand, other devices not included in the embodiment of the present invention may set the code value to another value (e.g., 0x00) and transmit the router solicitation message, as illustrated in 31b.

Accordingly, the master device included in one embodiment of the present invention may transmit the router advertisement message only when the code value of the router solicitation message is set to a predetermined value (e.g., 0x01).

The IPv4 router solicitation message may further include a checksum field and a reserved field, located after the code value, for checking errors in the message.

Message 31a of FIG. 4 may be indicated as a master IPv4 address request message of an Internet control message protocol version 4 (ICMPv4) of an IPv4 layer.

FIG. 5 is a view illustrating a configuration of a router advertisement message usable in the configuration of IPv4 according to one embodiment of the present invention. The master device transmits the code value of the IPv4 router advertisement message to the predetermined value (e.g., 0x01 or the like). The master device included in the embodiment of the present invention sets the code value to the predetermined value (e.g., 0x01) and transmits the router advertisement message including the total number of groups (Group Number) and information on group identifiers and addresses (Group Id[1], Master IPv4 Address, Group Id[2], Master IPv4 Address, and the like), as illustrated in 32. On the other hand, other devices not included in the embodiment of the present invention may set the code value to a different value (e.g., 0x00) and transmit the router advertisement message.

The IPv4 router advertisement message may further include a checksum field for checking errors in the message, the number of addresses (Num Addrs) field, an entry size (Addr Entry Size) field, a lifetime field, and each router address and preference level (RouterAddress[1], Preference Level[1], Router Address[2], Preference Level[2], ...), which are located after the code value.

The slave device included in one embodiment of the present invention may check the group information included in the corresponding advertisement message only when the code value of the router advertisement message is set to the predetermined value (e.g., Ox01).

The message of FIG. 5 may be indicated as a master IPv4 address response message of the ICMPv4 of the IPv4 layer.

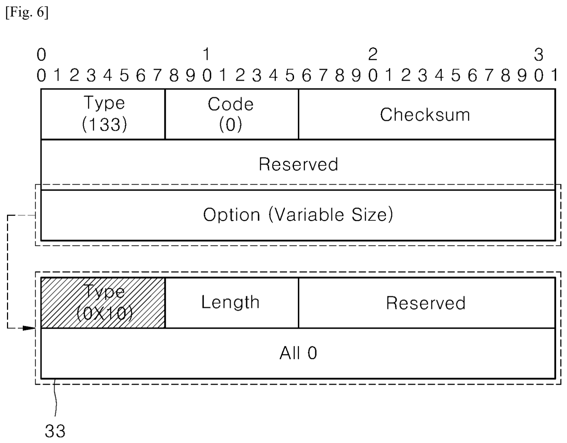

FIG. 6 is a view illustrating the configuration of the router solicitation message usable in a configuration of IPv6 according to one embodiment of the present invention.

The slave device according to one embodiment of the present invention sets the type value of the option field, which is a variable size area of an IPv6 router solicitation message, to a predetermined value (e.g., 0x10 or the like), as illustrated in 33. In addition, the slave device included in the embodiment of the present invention sets the type value of the option field to the predetermined value (e.g., 0x10) and transmits the router solicitation message. On the other hand, other devices not included in the embodiment of the present invention may set the type value to a different value (e.g., 0x00) and transmit the router solicitation message.

In addition, the option field of the router solicitation message according to one embodiment of the present invention may include a length field in units of 8 octets indicating length information, a reserved field, and a field including all "0" following the fields.

The master device included in one embodiment of the present invention may transmit the router advertisement message only when the type value of the option field of the router solicitation message is set to the predetermined value (e.g., 0x10).

The message of FIG. 6 may be indicated as a master IPv6 address request message of an ICMPv6 of an IPv6 layer.

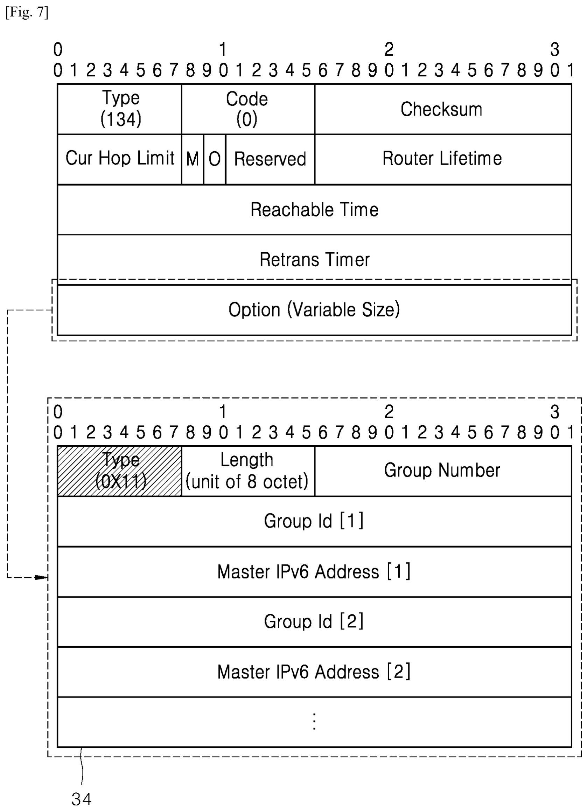

FIG. 7 is a view illustrating a configuration of a router advertisement message usable in the configuration of IPv6 according to one embodiment of the present invention. As illustrated in 34, the master device sets the type value of the option field, which is a variable size area of an IPv6 router advertisement message, to a predetermined value (e.g., 0x11 or the like).

The master device included in the embodiment of the present invention sets the type value of the option field to the predetermined value (e.g., 0x11) and transmits the router advertisement message including information on the total number of groups (Group Number) and information on group identifiers and addresses (Group Id[1], Master IPv6 Address, Group Id[2], Master IPv6 Address, and the like), as illustrated in 34. On the other hand, other devices not included in the embodiment of the present invention may set the type value to a different value (e.g., 0x00) and transmit the router advertisement message.

More specifically, the option field of the IPv6 router advertisement message according to the embodiment of the present invention may set the type field to a predetermined value (e.g., 0x11) and include the field in units of 8 octet indicating the length of the message, and the field indicating the total number of groups (Group Number), which are located after the type field, as illustrated in 34.

The slave device included in one embodiment of the present invention may check the group information included in the corresponding advertisement message only when the type value of the option field of the router advertisement message is set to the predetermined value (e.g., 0x11).

The message of FIG. 7 may be indicated as a master IPv6 address response message of the ICMPv6 of the IPv6 layer.

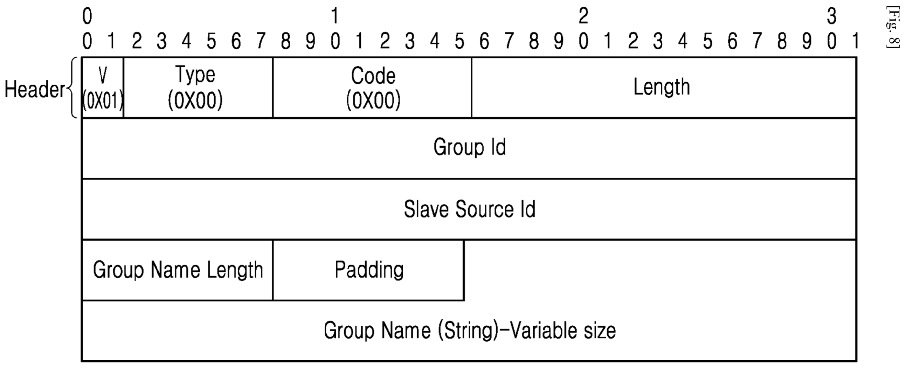

The message structure for performing the grouping process after performing the initialization process and the discovery process through the transmission process of the router solicitation message and advertisement message described in FIGS. 4 to 7 will be described in FIGS. 8 to 15. The initialization and discovery process has been described in FIG. 2, and the grouping process has been described in FIG. 3. During the grouping process, each device may transmit messages at the application layer.

FIGS. 8 to 15 may include the same header structure. Here, the header part is denoted as "Header." A "Code" field in the header part may include a predetermined value to distinguish the type of each message.

For example, depending on the type of message, the "Code" field has a value from 0x00 to 0x07.

FIG. 8 is a view illustrating a configuration of a master group solicitation message transmitted by a slave device to a master device according to one embodiment of the present invention. The master group information request message (Master_Group_Info_Rquest Message) is a message in which a slave device requests group information from a master device, and the slave device may use a group identifier (Group ID) or a group name (Group Name) acquired during the discovery process.

As illustrated in FIG. 8, the value of the "Code" field is set to, for example, 0x00. The "Group ID" field includes an identifier of a group from which the slave device wishes to obtain information, and the "Group Name" field includes the name of the group from which the slave device wishes to obtain information. The name may be stored within the message as a variable-size string type. The "Slave Source Id" is an identifier of the slave device requesting information.

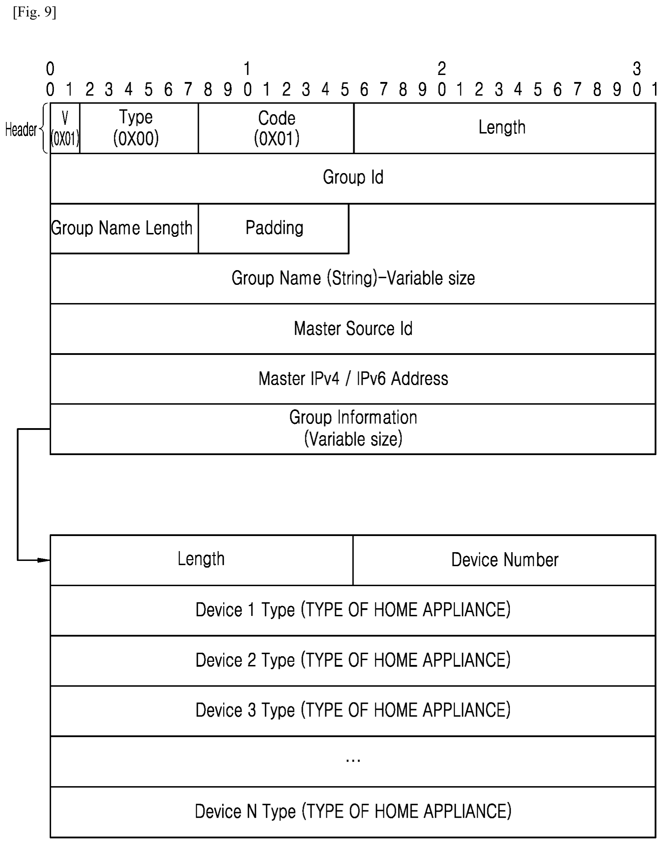

FIG. 9 is a view illustrating a configuration of a master group information response message transmitted from the master device to the slave device according to one embodiment of the present invention. The master group information response message (Master_Group_Info_Response Message) is a message including group information transmitted by the master device to the slave device and includes information on the group requested during the process of FIG. 8.

As illustrated in FIG. 9, the value of the "Code" field is set to, for example, 0x01. The "Group ID" field includes the group identifier when the master device provides group information to the slave device, and the "Group Name" field includes the group name when the master device provides group information to the slave device. The name may be stored within the message as a variable-size string type.

In addition, the "Master Source Id" is identification information of the master device of the corresponding group, and the "Master IPv4/IPv6 Address" is the IP address (IPv4 or IPv6) of the master device. The "Group Information" field includes information related to the group. The "Group Information" field includes a list of slave devices (Slave Device List) currently belonging to the group.

The "Group Information" field includes fields related to the length and the number of devices (Device Name), and in addition, the types for each device (types of home appliances) are listed, such as "Device 1 Type" and "Device 2 Type."

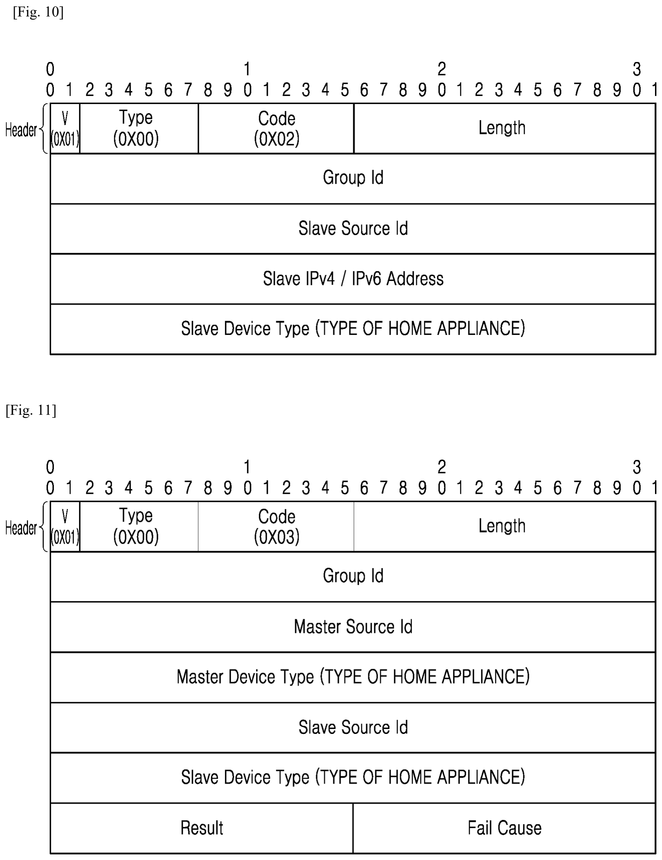

FIG. 10 is a view illustrating a configuration of a group registration request message transmitted from the slave device to the master device according to one embodiment of the present invention. The group registration request message (Slave_Group_Registration_Request Message) includes contents in which the slave device requests registration in a specific group from the master device and provides its own information to the master device.

As illustrated in FIG. 10, the value of the "Code" field is set to, for example, 0x02. The "Group ID" field is the identifier of the group to be registered. The "Slave Source ID" is the identifier of the slave device requesting registration in the group. The "Slave IPv4/IPv6 Address" is the IP address (IPv4 or IPv6) of the slave device. The "Slave Device Type" indicates the type of home appliance of the slave device requesting registration in the group.

FIG. 11 is a view illustrating a configuration of a group registration response message transmitted by the master device to the slave device according to one embodiment of the present invention. The group registration response message (Slave_Group_Registration_Response Message) includes the result of the slave device's registration request, provided by the master device. The value of the "Code" field is set to, for example, 0x03. The "Master Device Type" indicates the type of home appliance of the master device. The fields identical to those in FIG. 10 are replaced with the descriptions of FIG. 10.

The "Result" includes the processing result of the group registration request message in FIG. 10, and the "Fail Cause" includes information related to the reason for failure when group registration fails. The reason for failure may be precoded information, and in this case, the slave device and the master device may share the coded information.

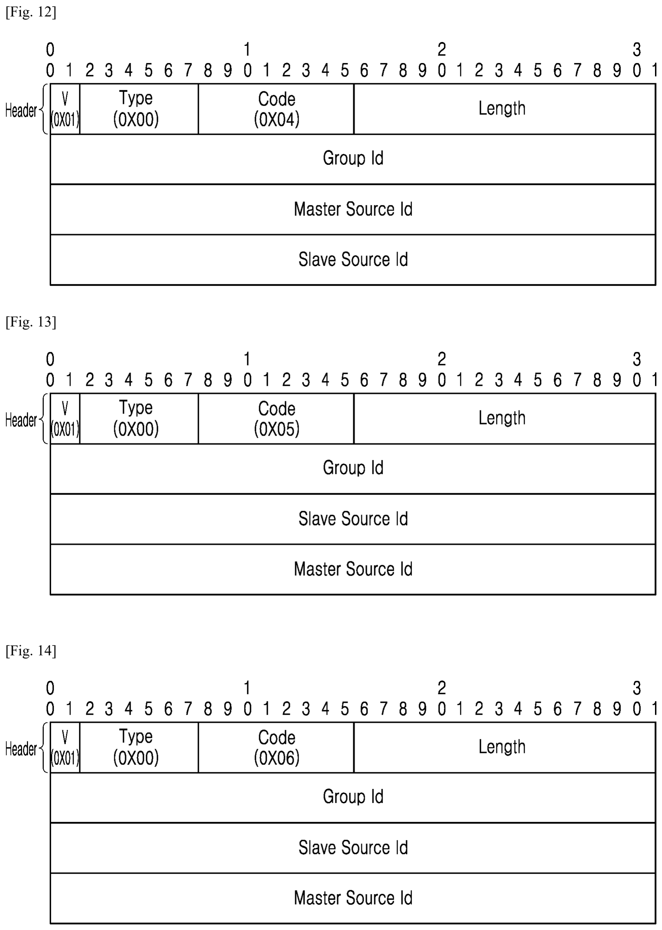

FIG. 12 is a view illustrating a configuration of a group deregistration request message transmitted by the master device to the slave device according to one embodiment of the present invention. The master group deregistration request message (Master De-registration Request Message) allows the master device to deregister a specific slave device from a group.

The value of the "Code" field is set to, for example, 0x04. The "Group ID" field is the identifier of the group from which the slave device will be deregistered. The "Master Source Id" is identification information of the master device of the corresponding group. The "Slave Source ID" field is the identifier of the slave device to be deregistered from the group.

FIG. 13 is a view illustrating a master group deregistration response message transmitted by the slave device to the master device according to one embodiment of the present invention. The master group deregistration response message (Master De-registration Response Message) is transmitted by the slave device to the master device in response to the message of FIG. 12.

The value of the "Code" field is set to, for example, 0x05. The "Group ID" field is the identifier of the group from which the slave device will be deregistered. The "Master Source Id" is identification information of the master device of the corresponding group. The "Slave Source ID" field is the identifier of the slave device to be deregistered from the group.

The slave device 200b (see FIG. 3) receiving the message of FIG. 12 from the master device 200a (see FIG. 3) withdraws from the group and transmits a withdrawal response message (see FIG. 13) to the master device 200a (see FIG. 3).

FIG. 14 is a view illustrating a slave group deregistration request message transmitted by the slave device to the master device according to one embodiment of the present invention. A group deregistration request message (Slave De-registration Request Message) is transmitted by the slave device to the master device to deregister from its own group.

The value of the "Code" field is set to, for example, 0x06. The "Group ID" field is the identifier of the group from which the slave device will be deregistered. The "Master Source Id" is identification information of the master device of the corresponding group. The "Slave Source ID" field is the identifier of the slave device to be deregistered from the group.

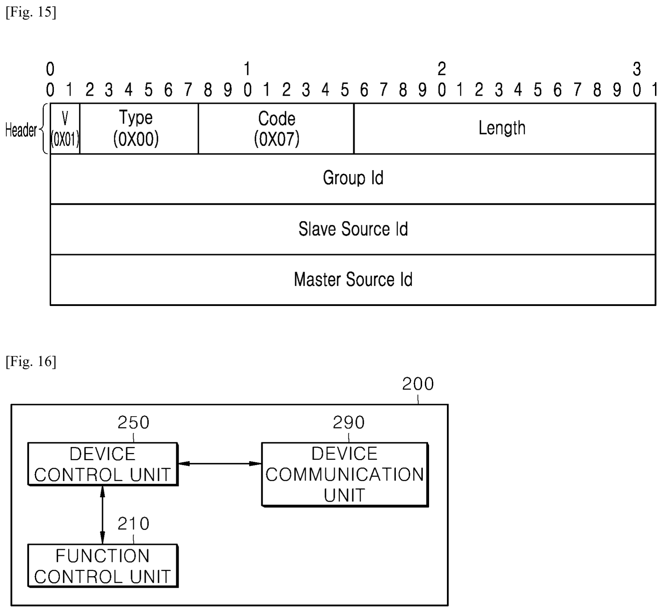

FIG. 15 is a view illustrating a slave group deregistration response message transmitted by the master device to the slave device according to one embodiment of the present invention. The slave deregistration response message (Slave De-registration Response Message) is transmitted by the master device to the slave device in response to the message of FIG. 14.

The value of the "Code" field is set to, for example, 0x07. The "Group ID" field is the identifier of the group from which the slave device will be deregistered. The "Master Source Id" is identification information of the master device of the corresponding group. The "Slave Source ID" field is the identifier of the slave device to be deregistered from the group.

The master device 200a (see FIG. 3) receiving the message of FIG. 14 from the slave device 200n (see FIG. 3) withdraws the slave device 200n (see FIG. 3) from the group and transmits a response message (see FIG. 15) to the slave device 200n (see FIG. 3).

The form and device type of the home appliance may be set as shown in the following table. These setting values may vary depending on the implementation method. The device type may also be set for each detailed model of the product group.

**[Table 1]**

| Device Type | Description |
|---|---|
| 0x01 | Top-loading washing machine |
| 0x02 | Front-loading washing machine |
| 0x03 | Side-by-side refrigerator |
| 0x04 | Mini refrigerator |
| ... | ... |
| 0xF1 | Microwave oven |
| 0xF2 | Robot cleaner |

FIG. 16 is a view illustrating components of a device according to one embodiment of the present invention. FIG. 16 illustrates components of a master device according to one embodiment or components of a slave device according to one embodiment.

The home appliance 200 may include a device control unit 250, a device communication unit 290, and a function control unit 210, and the home appliance 200 may further include other components necessary for the home appliance to provide predetermined functions.

The device control unit 250 may provide operating services of the home appliance 200 and may be implemented as hardware, such as a single chip, a printed circuit board (PCB), etc. When implemented as hardware, the device control unit 250 may be referred to as an OS service PCB (OSP) or an OS service chip (OSC). The device control unit 250 may include learning models, inference models, and the like for AI services or store related data. In this case, the device control unit 250 may provide the AI services.

The device communication unit 290 provides the functions necessary for the home appliance 200 to communicate with other servers or devices. For example, the device communication unit 290 may be implemented as hardware, such as a chip or PCB that establishes communication according to a specific communication protocol. When implemented as hardware, the device communication unit 290 may be implemented as a Wi-Fi chip.

The function control unit 210 may control the unique functions of the home appliance 200 and may be implemented as hardware, such as a single chip, a PCB, etc. When implemented as hardware, the function control unit 210 may be referred to as a load control PCB (LCP) or a load control chip (LCC)).

In one embodiment of the present invention, the device control unit 250 and the device communication unit 290 may be implemented as hardware, such as a single chip, a PCB, etc. In another embodiment of the present invention, the device control unit 250 and the device communication unit 290 may be implemented as hardware, such as a single chip, a PCB, etc. In still another embodiment of the present invention, the device control unit 250, the device communication unit 290, and the function control unit 210 may be implemented as software modules.

When the device of FIG. 16 operates as a master device, the individual components according to the embodiment of the present invention will be described as follows.

The device communication unit 290 communicates with a user terminal and slave devices. The device communication unit 250 communicates with the user terminal and the slave devices. After the device communication unit 290 receives a message notifying that it is the master device of the group from the user terminal S3 (see FIG. 2), the device communication unit 290 may transmit and receive the message of the IP layer with the slave devices to perform the discovery process with the slave devices (see S11 to S17 in FIG. 2).

During the discovery process, the device communication unit 290 may transmit and receive the message of the IP layer with the slave devices under the control of the device control unit 250. Alternatively, during the discovery process, the device communication unit 290 may automatically transmit and receive the message of the IP layer with the slave devices using the information provided by the device control unit 250 without additional control of the device control unit 250.

Meanwhile, the device control unit 250 may control the device communication unit 250 to transmit and receive the message of the application layer with the slave devices to perform the grouping process for the slave device and the group.

During the discovery process performed by the master device, the device control unit 250 controls the device communication unit 290, receives the router solicitation message of the IP layer from the slave devices, and transmits the router advertisement message to the slave devices in order to perform the discovery process.

Here, the embodiment in which, when the router solicitation message is the IPv4 router solicitation message, the value of the code field is set to the predetermined value has been described in FIG. 4.

Meanwhile, the embodiment in which, when the router solicitation message is the IPv6 router solicitation message, the value of the type field is set to the predetermined value has been described in FIG. 6.

In addition, a router advertisement message may include identification information on one or more groups and the IP address of the master device of each group.

Here, the embodiment in which, when the router advertisement message is the IPv4 router advertisement message, the device control unit 250 or the device communication unit 290 sets the value of the code field of the router advertisement message to the predetermined value has been described in FIG. 5.

Here, the embodiment in which, when the router advertisement message is the IPv6 router advertisement message, the device control unit 250 or the device communication unit 290 sets the value of the type field in the option of the router advertisement message to the predetermined value has been described in FIG. 7.

As illustrated in FIG. 3, the message of the application layer transmitted and received by the master device may be classified as the message transmitted and the message received during the grouping process.

In one embodiment, the device control unit 250 may control the device communication unit 290 to transmit any one of the master group information response message, the slave group registration response message, the master group deregistration request message, and the slave group deregistration response message to the slave devices to perform the grouping process.

In another embodiment, the device communication unit 290 may receive any one of the master group information request message, the slave group registration request message, the master group deregistration response message, and the slave group deregistration request message from the slave device.

When the device of FIG. 16 operates as a slave device, the individual components according to the embodiment of the present invention will be described as follows.

The device communication unit 290 communicates with a user terminal and a master device. The device control unit 250 generates a message to be transmitted to the user terminal and the master device. After the device communication unit 290 receives a message notifying that it is the slave device of the group from the user terminal (see S4 and S5 in FIG. 2), the device communication unit 290 may transmit and receive the message of the IP layer with the master device to perform the discovery process with the master device (see S11 to S17 in FIG. 2).

During the discovery process, the device communication unit 290 may transmit and receive the message of the IP layer with the master device under the control of the device control unit 250. Alternatively, during the discovery process, the device communication unit 290 may use the information provided by the device control unit 250 and automatically transmit and receive the message of the IP layer with the master device without additional control of the device control unit 250.

Meanwhile, the device control unit 250 may control the device communication unit 250 to transmit and receive the message of the application layer with the master device to perform the grouping process for the master device and the group.

During the discovery process performed by the slave device, the device control unit 250 controls the device communication unit 290, transmits the router solicitation message of the IP layer to the master device, and receives the router advertisement message from the master device to perform the discovery process.

Here, the embodiment in which, when the router solicitation message is the IPv4 router solicitation message, the device control unit 250 or the device communication unit 290 sets the value of the code field to the predetermined value has been described in FIG. 4.

Meanwhile, the embodiment in which, when the router solicitation message is the IPv6 router solicitation message, the device control unit 250 or the device communication unit 290 sets the value of the type field to the predetermined value has been described in FIG. 6.

In addition, the router advertisement message may include identification information on one or more groups and the IP address of the master device of each group.

Here, the embodiment in which, when the router advertisement message is the IPv4 router advertisement message, the value of the code field of the router advertisement message is set to the predetermined value has been described in FIG. 5.

Meanwhile, the embodiment in which, when the router advertisement message is the IPv6 router advertisement message, the value of the type field in the option of the router advertisement message is set to the predetermined value has been described in FIG. 7.

As illustrated in FIG. 3, the message of the application layer transmitted and received by the slave device may be classified as the message transmitted and the message received during the grouping process.

In one embodiment, the device control unit 250 may control the device communication unit 290 to transmit any one of the master group information request message, the slave group registration request message, the master group deregistration response message, and the slave group deregistration request message to the master device to perform the grouping process.

In another embodiment, the device communication unit 290 may receive any one of the master group information response message, the slave group registration response message, the master group deregistration request message, and the slave group deregistration response message from the slave device.

According to the embodiments, communication may be established between the master device and the slave devices using data of the data transmission physical layer or the message of the IP layer using the communication protocol (e.g., the Wi-Fi protocol) of the device communication unit 290 embedded in the home appliance. In one embodiment, the router discovery protocol may be applied during the discovery process, and the home appliance may perform grouping at the application layer and provide services based on AI and grouping.

According to the embodiments, multiple home appliances may form a group. In this case, the group consists of one master device and one or more slave devices, and the master device may operate as a Wi-Fi soft AP. In addition, the slave device may operate as a Wi-Fi station.

In addition, the master device may provide specific services to slave devices and control the slave devices. The slave devices may receive specific services from the master device.

The services provided by the master device to the slave devices may vary depending on the functions provided by the devices, and services to which AI-based technology is applied are, for example, provided.

The settings of the master device and the slave device is performed through the user terminal.

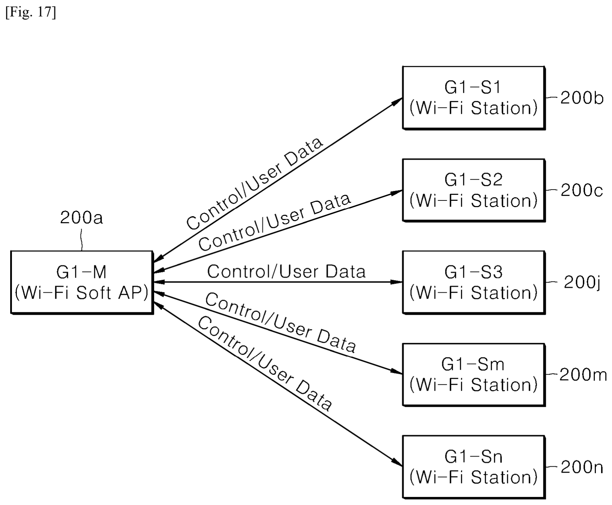

FIG. 17 is a view illustrating the operations between the master device and slave devices constituting a group using a Wi-Fi protocol according to one embodiment of the present invention. The group G1 generated in the IPv4 or IPv6 network includes one master device G1-M 200a and multiple slave devices 200b, 200c, 200j, 200m, and 200n. The slave devices are denoted as G1-S1, G1-S2, G1-S3, G1-Sm, and G1-Sn.

The master device 200a and the slave devices 200b, 200c, 200j, 200m, and 200n may transmit and receive data generated during device control (Control data) and user data generated by each device.

According to the embodiment of the present invention, wireless resources can be efficiently used by grouping home appliances using Wi-Fi wireless technology to provide various services.

That is, through the grouping process that adds each home appliance to a specific group, the home appliance (e.g., a master device) may simultaneously control multiple home appliances (e.g., slave devices). To this end, groups may be automatically generated for home appliances. That is, groups may be automatically generated based on the capabilities provided by each home appliance.

Alternatively, multiple groups may be generated within a single home network depending on the applications, and a single home appliance may simultaneously join multiple groups.

In addition, according to the embodiments of the present invention, wireless resources can be efficiently used. Accordingly, since group information is transmitted and received only when the sharing of the group information is required between the devices, signaling overhead can be minimized.

In addition, according to the embodiments of the present invention, the quality of user data can be improved. For example, by minimizing signaling for group maintenance, the communication protocol of home appliances can be applied to maximally use wireless resources for user data transmission and reception.

In addition, the embodiments of the present invention are designed to correspond to future networks, thereby ensuring continuous applicability even when the network environment changes. For example, the group configuration of the present invention may be used not only in the IPv4 network but also in the IPv6 network. In addition, by using Wi-Fi technology, a universal communication protocol may be applied. That is, by partially modifying the message structures of IPv4 router discovery technology (RFC1256) and IPv6 router discovery technology (RFC4861), the advantages of grouping technology can be used while using Wi-Fi technology.

In addition, using the AI module installed in the device control unit 250 of home appliances may provide diverse and useful services to users. That is, the home appliances forming a group may provide various services to the users. In particular, various services may be provided in conjunction with the AI technology embedded within the home appliance.

Next, an embodiment in which home appliances included in a group provide group services will be described.

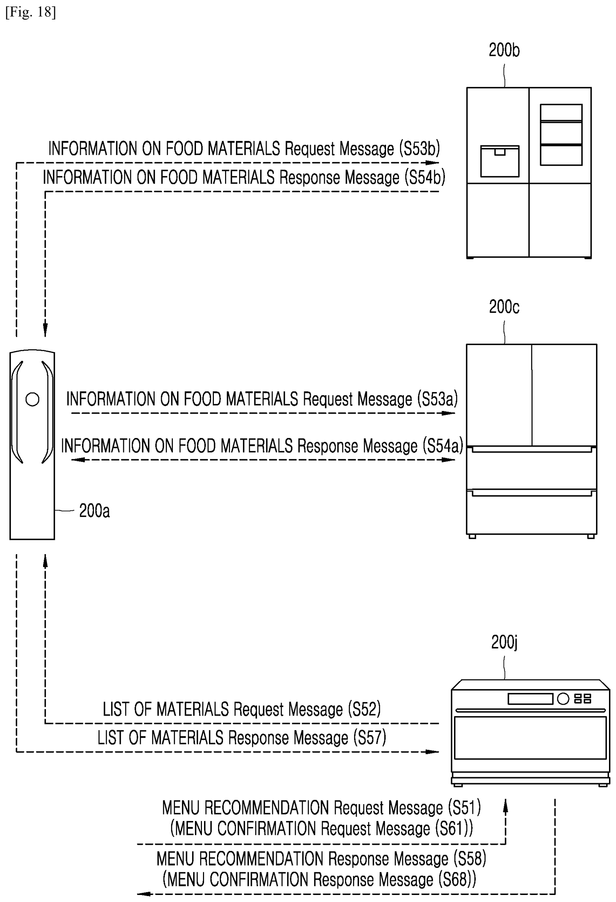

FIG. 18 is a view illustrating a process in which home appliances belonging to a group provide services for recommending today's menu or checking my recipes according to one embodiment of the present invention. According to one embodiment of the present invention, when a user requests menu recommendations from an oven 200j, the oven 200j may output various menu recommendation information through the group.

In one embodiment, the air conditioner 200a is the master device, and a refrigerator 200b, a kimchi refrigerator 200c, and the oven 200j are slave devices.

A user may request menu recommendations from the oven 200j by voice or text or by pressing a button. That is, the user inputs a menu recommendation request message (Request Message) into the oven 200j (S51). The oven 200j transmits a request related to food materials (material list request message) to the air conditioner 200a, which is the master device (S52). The air conditioner 200a transmits a message requesting food material information (food material information request message) from the refrigerator 200b and the kimchi refrigerator 200c, which are home appliances related to food materials (S53a, S53b).

In addition, the air conditioner 200a receives a response message related to food material information (food material information response message) from the refrigerator 200b and the kimchi refrigerator 200c (S54a, S54b). The air conditioner 200a generates a list of materials from the received message and transmits the material list response message to the oven 200j (S57). In addition, the oven 200j outputs a menu recommendation response message using the materials included in the material list response message (S58).

In the embodiment of FIG. 18, the air conditioner 200a, which is the master device, and the refrigerator 200b, the kimchi refrigerator 200c, and the oven 200j, which are the slave devices, may form a group and transmit and receive necessary information. As a result, when a user requests menu recommendations from the oven 200j, the oven 200j requests a list of materials remaining in the refrigerator 200b/kimchi refrigerator 200c from the air conditioner 200a, which is the master device.

In addition, the air conditioner 200a, which is the home appliance not including food materials, routes a message requesting food material information to the refrigerator 200b and the kimchi refrigerator 200c. In addition, the air conditioner 200a may provide the received information to the oven 200j, and the oven 200j may recommend a menu to the user based on the materials remaining in the refrigerator 200b.

In this way, information on home appliances may be determined through a group, thereby improving user convenience.

The embodiment of FIG. 18 may also be applied to a process of determining whether a specific menu may be cooked.

The user may store frequently cooked menus in the oven. In addition, a list of main materials for each menu may be input. For example, a user may input a recipe and materials through the "Registration of user-defined menu recipes" process provided by the oven 200j. Alternatively, the oven 200j may download recipe information from the Internet or the user terminal 100. In addition, when the user selects one of the "List of user-defined menu recipes," the master device 200a in the group may determine whether the corresponding material is stored in the refrigerator or the kimchi refrigerator.

This will be described in more detail. It is assumed that the user has previously input his/her recipe information into the oven 200j.

In one embodiment, the user may input multiple recipes into the oven 200j. For example, a user inputs materials 1, 2, and 3 as first recipe information, materials 1, 3, and 4 as second recipe information, and materials 5, 6, and 1 as third recipe information.

In addition, instead of operation S51 of FIG. 18, the user inputs a menu confirmation request message in operation S61 of FIG. 18 into the oven 200j. For example, the user selects one of the recipes registered in the oven 200j.

Operations S52 to S57 following operation S61 are the same as those illustrated in FIG. 18. Alternatively, a process in which the air conditioner 200a, which is the master device, determines whether the materials of the selected recipe are stored in the refrigerator/kimchi refrigerator 200b/200c may be performed instead of operations S52 to S57.

Then, the oven 200j receiving the list of materials or the presence of materials may output a menu confirmation response message (S68).

The above description will be summarized as follows.

The oven 200j requests a list of materials remaining in the refrigerator/kimchi refrigerator 200b/200c from the air conditioner 200a, which is the master device (S52). In addition, when the master device is not the refrigerator 200b or the kimchi refrigerator 200c, the request message is routed to the refrigerator 200b and the kimchi refrigerator 200c. As a result, the air conditioner 200a receives material information.

The oven 200j outputs whether the user-selected menu is currently available for cooking based on the materials remaining in the refrigerator 200a (S68). When no materials are available for the corresponding menu, the oven may output a list of materials not currently stored in the refrigerator 200b or the kimchi refrigerator 200c, or conversely, a list of materials currently stored in the refrigerator 200b or the kimchi refrigerator 200c. As a result, the oven 200j may output whether the frequently cooked menu is currently available for cooking, and if not, may output which materials are currently insufficient.

The embodiment of FIG. 18 may be applied to an embodiment in which a first slave device (e.g., 200b, 200c) and a second slave device 200j are registered in a group, and the first slave device 200b or 200c stores food materials and the second slave device 200j cooks food materials.

The master device 200a may collect information on the food materials stored in the first slave devices 200b and 200c in response to menu recommendations or menu confirmation message received from any one of the first slave devices 200b and 200c or the second slave device 200j and transmit the information to the second slave device 200j.

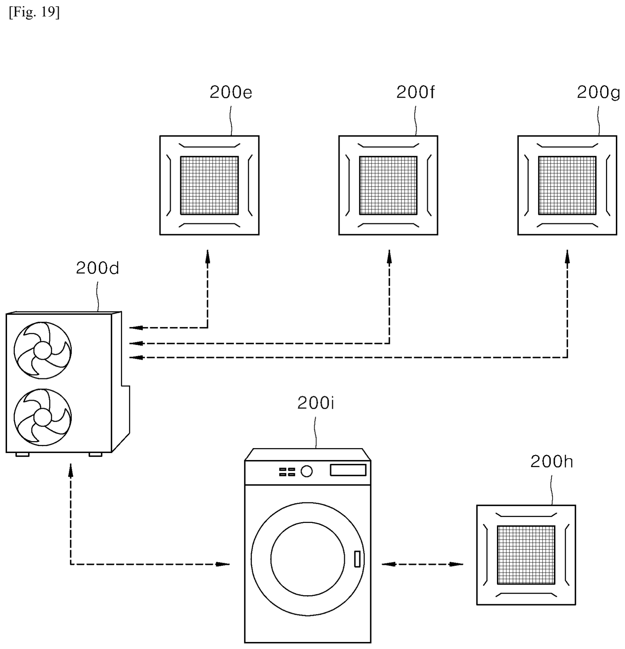

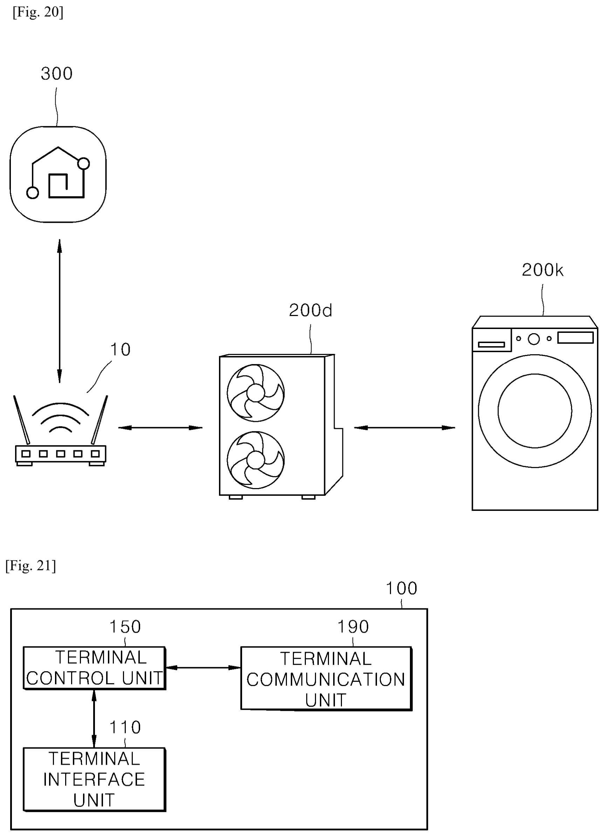

An embodiment in which a relay agent service is implemented will be described in FIGS. 19 and 20.

FIG. 19 is a view illustrating a configuration in which the slave device serves as a relay agent for other slave devices according to one embodiment of the present invention.

Air conditioner indoor units 200e, 200f, and 200g disposed in the bedroom, an air conditioner indoor unit 200h disposed in the basement, which is a communication shadow area, and a drying machine 200i are all slave devices. These are included in a group managed by an air conditioner outdoor unit 200d. Each slave device may be controlled by the air conditioner outdoor unit 200d, which is the master device.

That is, an outdoor unit and multiple indoor units of a single air conditioner may communicate with each other using wireless Wi-Fi communication instead of wired RS485 communication. In this case, when a specific indoor unit 200h is located in the Wi-Fi shadow area of the master device and may not normally communicate with the air conditioner outdoor unit 200d, which is the master device, the indoor unit 200h may use the drying machine 200i, which is the slave device disposed between the indoor unit 200h and the master device, as a relay agent home appliance, to communicate with the air conditioner outdoor unit 200d. Here, the drying machine 200i serves as a relay agent.

In summary, since the air conditioner indoor unit 200h in the basement is disposed in the communication shadow area, the air conditioner indoor unit 200h has limitations in directly communicating with the air conditioner outdoor unit 200d, which is the master device. Accordingly, the air conditioner indoor unit 200h in the basement may communicate with the air conditioner outdoor unit 200d, which is the master device, using the drying machine 200i as a relay agent.

FIG. 20 is a view illustrating a configuration in which the master device serves as a relay agent for slave devices according to one embodiment of the present invention.

When a washing machine 200k included in a group managed by the air conditioner outdoor unit 200d is disposed in the Wi-Fi shadow area, the washing machine 200k may not communicate with an external server 300. The air conditioner outdoor unit 200d, which is the master device, transmits data transmitted by the washing machine 200k included in the group to an access point (AP) 10 so that the server 300 may receive data from the washing machine 200k. Likewise, data transmitted by the server 300 to the washing machine 200k may also be received by the air conditioner outdoor unit 200d from the AP 10 and transmitted to the washing machine 200k.

As illustrated in FIGS. 19 and 20, when a specific slave device is located in a shadow area of the in-home AP 10, the slave device may communicate with the external server 300 via a "relay agent service."

In the case of FIG. 19, when the first slave device 200h and the second slave device 200i are registered in a group and the first slave device 200h is disposed in a communication shadow area, the first slave device 200h may set the second slave device 200i as a relay and transmit data to the master device 200a through the second slave device 200i.

In the case of FIG. 20, when the first slave device 200k is registered in a group and the first slave device 200k is disposed in the communication shadow area, the first slave device 200k may set the master device 200a as a relay and transmit data to the AP 10 through the master device 200a.

In large homes, such as those in the US or Europe, when it is difficult to provide services to the entire home with a single Wi-Fi AP, the "relay agent service" may be used to provide various services to users. As a result, the physical group range can be expanded.

FIG. 21 is a view illustrating a configuration of a user terminal according to one embodiment of the present invention.

The user terminal 100 may generate a group of multiple home appliances in a home network system. The user terminal 100 may include a terminal control unit 150, a terminal communication unit 190, and a terminal interface unit 110 and further include other components necessary for the operation of the user terminal 100.

The terminal communication unit 190 communicates with two or more home appliances. The terminal control unit 150 processes group settings for home appliances. The terminal interface unit 110 displays information related to the group settings for home appliances or receives selections.

In addition, as described in FIGS. 1 and 2, the terminal control unit 150 generates a first message notifying the master device belonging to the group that it is the master device of the group. In addition, the terminal control unit 150 generates a second message notifying the slave device belonging to the group that it is the slave device of the group. In addition, the terminal communication unit 190 transmits the first message to the master device and the second message to the slave device. Reference is made to operation S3 or S5 in FIG. 2.

During the process of setting the group, the terminal control unit 150 displays a list of multiple home appliances on the terminal interface unit 110 and provides the terminal interface unit 110 with recommended group information that recommends these home appliances as a single group according to various criteria, enabling the terminal interface unit 110 to display the recommended group information.

For example, the terminal control unit 150 may generate recommended groups based on the physical locations of the home appliances. Alternatively, the terminal control unit 150 may generate recommended groups based on distances between the home appliances. For example, home appliances located in specific spaces (rooms, a living room, a kitchens, and the like) may be grouped. When the terminal interface unit 110 displays information recommending appliances in the bedroom and living room as one group and appliances in the kitchen and laundry room as another group, the user can more easily set groups. In addition, the terminal control unit 150 may set home appliances that are physically close together as one recommended group.

In addition, the terminal control unit 150 may set the first and second home appliances as a recommended group to establish communication through the second home appliance, which is located close to the first home appliance located in the shadow area and is not located in the shadow area, based on the communication range of the home appliances. In addition, the terminal control unit 150 may set the first and second home appliances as the recommended groups based on the functions provided by the home appliances.

When such recommended group information is displayed on the terminal interface unit 110, the user can easily set groups.

After setting the group, the user terminal 100 may cancel the group. For example, the terminal control unit 150 may generate a group release message to release a group, and the terminal communication unit 190 may transmit the group release message to the master device. In this case, the master device may transmit a master group deregistration request message (see S26 in FIG. 3) to all slave devices included in the group.

In addition, the user terminal 100 may generate condition information for deregistering a slave device. For example, the terminal control unit 150 may generate condition information including time information at which a slave device is deregistered after maintaining registration in the group (e.g., after 50 hours from registration) or communication conditions under which the slave device cannot maintain registration (e.g., when the size or number of transmitted/received data is a predetermined reference or more).

In addition, the terminal communication unit 190 transmits the condition information to the master device or the slave device. As a result, when the master or slave device meets the cancellation condition information after group registration, the master or slave device may transmit the master group deregistration request message (see S26 in FIG. 3) or the slave group deregistration request message (see S28 in FIG. 3).

According to the embodiment of the present invention, any home appliance may form a group centered on that home appliance, and any home appliance may become the master. In this case, the master device may perform the Wi-Fi soft AP operation. Conventionally, only a single network is formed centered on a single Wi-Fi AP, but in the embodiment of the present invention, various groups may form networks, and the configuration of these networks may also be dynamically adjusted.

In particular, when the user terminal is used to designate specific home appliances as masters or slaves, groups may be automatically generated, thereby enhancing user convenience.

In addition, multiple groups may be generated using the same home appliances according to the applications, locations, or a specific grouping principle, and a single home appliance may join multiple groups simultaneously. That is, a single home appliance may participate in multiple groups.

In addition, a new, efficient protocol can be applied to the discovery and grouping processes to establish home network groups of home appliances. When the new protocol is applied, messages are transmitted without the need for periodic broadcast messages to generate groups, thereby efficiently using Wi-Fi resources during group generation.

In addition, various AI-based services centered on these groups may be provided to users.

According to the embodiments of the present invention, home appliances (e.g., LG UP home appliances) can be automatically grouped and various user services can be provided to home appliance users via the home network. Since multiple devices may be grouped in various ways, the limitation of configuring a single network centered on a single Wi-Fi AP in the home has been overcome.

In particular, any home appliance may become a master and serve as a Wi-Fi soft AP. Accordingly, when the user terminal designates a master device and slave devices using a specific app (e.g., a ThinQ app), a group is automatically generated.

The user terminal 100 may generate multiple groups using specific home appliances according to the applications, locations, or a specific grouping principle, and by allowing a single home appliance to join multiple groups simultaneously, an efficient and flexible home network can be implemented.

In addition, a single Wi-Fi chip within the home appliance can simultaneously support both a station mode and a soft AP mode and operate as a master or slave device.

In addition, even when each device establishes network connection, a slave device may be withdrawn from the group due to a timeout under predetermined conditions. In addition, when a specific device is in a network shadow area, the specific device may communicate with an external unit by using another master or slave device as a relay.

Even though all components constituting the embodiments of the present invention have been described as being coupled or coupled and operated, the present invention is not necessarily limited to these embodiments, and one or more of all components may be selectively coupled and operated without departing from the scope of the present invention. In addition, each of the components may be implemented as a single, independent hardware, but some or all of the components may be selectively coupled and implemented as a computer program having program modules that perform some or all of the combined functions of one or more hardware units. The codes and code segments constituting the computer program can be easily inferred by those skilled in the art. Such a computer program may be stored in a computer-readable storage medium and read and executed by a computer, thereby implementing the embodiments of the present invention. The storage media for computer programs include magnetic recording media, optical recording media, and storage media including semiconductor recording devices. In addition, a computer program implementing the embodiments of the present invention includes program modules transmitted in real time through an external device.

The above description focuses on the embodiments of the present invention, but various changes and modifications may be made within the scope of those skilled in the art. Accordingly, it will be understood that these changes and modifications are included within the scope of the present invention as long as they do not depart from the scope of the present invention.

### [DESCRIPTION OF REFERENCE NUMERALS]

10: access point 100: user terminal
200: home appliance 300: server

## Claims

1. A user terminal comprising:
a terminal communication unit configured to communicate with two or more home appliances;
a terminal control unit configured to process group settings for the home appliances; and
a terminal interface unit configured to display information related to the group settings for the home appliances or receive selection,
wherein the terminal control unit generates a first message notifying a master device belonging to a group that it is a master device of the group and a second message notifying a slave device belonging to the group that it is a slave device of the group, and
the terminal communication unit transmits the first message to the master device and the second message to the slave device.

2. The user terminal of claim 1, wherein the terminal control unit displays a list of a plurality of home appliances on the terminal interface unit and controls the terminal interface unit to display recommended group information on the terminal interface unit according to at least one of physical locations of the home appliances, distances between the home appliances, a communication range of the home appliances, or functions provided by the home appliances.

3. The user terminal of claim 1, wherein the terminal control unit generates a group release message for releasing the group, and the terminal communication unit transmits the group release message to the master device.

4. The user terminal of claim 1, wherein the terminal control unit generates condition information for the slave device registered in the group to cancel the registration, and
the terminal communication unit transmits the condition information to the master device or the slave device.

5. A master device comprising:
a device communication unit configured to communicate with a user terminal and a slave device; and
a device control unit configured to generate a message to be transmitted to the user terminal and the slave device,
wherein the device communication unit receives a message notifying that it is a master device of a group from the user terminal and transmits and receives a message of an Internet protocol (IP) layer to and from the slave device to perform a discovery process with the slave device, and
the device control unit controls the device communication unit to transmit and receive a message of an application layer to and from the slave device to perform a grouping process for the slave device and the group.

6. The master device of claim 5, wherein the device control unit controls the device communication unit to perform the discovery process, receives a router solicitation message of the IP layer from the slave device, and transmits a router advertisement message to the slave device,
when the router solicitation message is an IPv4 router solicitation message, a value of a code field is set to a predetermined value, and
when the router solicitation message is an IPv6 router solicitation message, a value of a type field is set to a predetermined value.

7. The master device of claim 6, wherein the router advertisement message includes identification information on one or more groups and an IP address of a master device of each group,
when the router advertisement message is an IPv4 router advertisement message, the device control unit sets a value of a code field of the router advertisement message to a predetermined value, and
when the router advertisement message is an IPv6 router advertisement message, the device control unit sets a value of a type field in an option of the router advertisement message to a predetermined value.

8. The master device of claim 5, wherein the device control unit controls the device communication unit to transmit any one of a master group information response message, a slave group registration response message, a master group deregistration request message, and a slave group deregistration response message to the slave device to perform the grouping process.

9. The master device of claim 5, wherein the device communication unit receives any one of a master group information request message, a slave group registration request message, a master group deregistration response message, and a slave group deregistration request message from the slave device.

10. A slave device comprising:
a device communication unit configured to communicate with a user terminal and a master device; and
a device control unit configured to generate a message to be transmitted to the user terminal and the master device,
wherein the device communication unit receives a message notifying that it is a slave device of a group from the user terminal and transmits and receives a message of an Internet protocol (IP) layer to and from the master device to perform a discovery process with the master device, and
the device control unit controls the device communication unit to transmit and receive a message of an application layer to and from the master device to perform a grouping process for the master device and the group.

11. The slave device of claim 10, wherein the device control unit controls the device communication unit to perform the discovery process, transmits a router solicitation message of the IP layer to the master device, and receives a router advertisement message from the master device,
when the router solicitation message is an IPv4 router solicitation message, the device control unit sets a value of a code field to a predetermined value, and
when the router solicitation message is an IPv6 router solicitation message, the device control unit sets a value of a type field to a predetermined value.

12. The slave device of claim 11, wherein the router advertisement message includes identification information on one or more groups and an IP address of a master device of each group,
when the router advertisement message is an IPv4 router advertisement message, a value of a code field of the router advertisement message is set to a predetermined value, and
when the router advertisement message is an IPv6 router advertisement message, a value of a type field in an option of the router advertisement message is set to a predetermined value.

13. The slave device of claim 10, wherein the device communication unit receives any one of a master group information response message, a slave group registration response message, a master group deregistration request message, and a slave group deregistration response message from the master device.

14. The slave device of claim 10, wherein the device control unit controls the device communication unit to transmit any one of a master group information request message, a slave group registration request message, a master group deregistration response message, and a slave group deregistration request message to the master device to perform the grouping process.

15. A method of setting a group in a home network system, which is an operating method of two or more home appliances and a user terminal constituting the home network system, the method comprising:
setting, by the user terminal, a group for the two or more home appliances, transmitting a first message notifying a master device among the home appliances that it is a master device of the group, and transmitting a second message notifying a slave device among the home appliances that it is a slave device of the group;
receiving, by the master device and the slave device, the first message and the second message, respectively, and transmitting and receiving a message of an Internet protocol (IP) layer to perform a discovery process; and
transmitting and receiving, by the master device and the slave device, a message of an application layer to perform a grouping process after the discovery process.

16. The method of claim 15, further comprising generating, by the user terminal, a group release message for releasing the group and transmitting the group release message to the master device.

17. The method of claim 15, further comprising generating, by the user terminal, condition information for the slave device registered in the group to cancel the registration and transmitting the condition information to the master device or the slave device.

18. The method of claim 15, further comprising, when a first slave device and a second slave device are registered in the group and the first slave device is a home appliance that stores food materials and the second slave device is a home appliance that cooks the food materials, and
collecting, by the master device, information on the food materials stored in the first slave device in response to a menu recommendation or menu confirmation message received from any one of the first slave device or the second slave device.

19. The method of claim 15, further comprising, when a first slave device and a second slave device are registered in the group and the first slave device is disposed in a communication shadow area,
setting, by the first slave device, the second slave device as a relay and transmitting data to the master device or an access point via the second slave device.
